# EUROPÄISCHE PATENTSCHRIFT

(11) **EP 3 341 105 B1**
(45) Veröffentlichungstag und Bekanntmachung des Hinweises auf die Patenterteilung: **09.12.2020**
(21) Anmeldenummer: 16767145.2
(22) Anmeldetag: 23.08.2016
(51) Int. Cl.: B01D 35/153, B01D 29/15

(54) **FLUIDFILTER UND FILTEREINSATZ DAFÜR**
FLUID FILTER AND FILTER INSERT FOR THE SAME
FILTRE À FLUIDE ET CARTOUCHE FILTRANTE POUR LEDIT FILTRE

(30) Priorität: 28.08.2015 DE 102015114315
(43) Veröffentlichungstag der Anmeldung: 04.07.2018
(73) Patentinhaber: Hengst SE, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2016/069896
(87) Internationale Veröffentlichungsnummer: WO 2017/036856

(56) Entgegenhaltungen:
- EP-A1- 2 412 417
- DE-C- 569 467
- DE-C- 943 643
- DE-C1- 3 622 154
- FR-E- 25 647

## Beschreibung

Die Erfindung betrifft einen Fluidfilter, der an einen ein zentrales Standrohr aufweisenden Anschlussflansch anbaubar ist, wobei der Fluidfilter einen austauschbaren Filtereinsatz mit einem hohlzylindrischen, stirnseitig von zwei Endscheiben eingefassten Filterstoffkörper aufweist, der auf das Standrohr aufsteckbar ist, und wobei der Fluidfilter ein becherförmiges Schraubgehäuse aufweist, welches im Zentrum seines Bodens ein Schraubgewinde besitzt, das mit einem am freien Ende des Standrohrs angebrachten Gegengewinde verschraubbar ist, und welches an seinem freien Rand eine Dichtung trägt, mittels der das Schraubgehäuse im montierten Zustand gegen eine Dichtfläche des Anschlussflansches abdichtbar ist. Außerdem betrifft die Erfindung einen Filtereinsatz zur Verwendung in dem Fluidfilter.

Ein Fluidfilter der vorstehend genannten Art ist beispielsweise aus der WO 2015/036 107 A1 bekannt. Bei diesem bekannten Fluidfilter hat sich herausgestellt, dass eine Gefahr besteht, dass es zu Undichtigkeiten zwischen dem Schraubgehäuse und dem Anschlussflansch kommt, weil beim Anbauen des Filters an den Anschlussflansch der freie Rand des Schraubgehäuses mit der Dichtung nicht immer exakt auf der zugehörigen, in der Praxis oft relativ schmalen Dichtfläche zu liegen kommt.

Das Dokument DE 36 22 154 C1 zeigt eine Filteranordnung mit einem stehenden Filter mit Filtergehäuse und Filtereinsatz zur Reinigung von Schmieröl einer Brennkraftmaschine. Die Aufgabe besteht hier darin, die Filteranordnung derart auszubilden, dass beim Filterwechsel auf einfache Art eine Entleerung des Filterinneren ohne Vermischung von Reinöl mit Schmutzöl bei einer geringen Bauhöhe der gesamten Filteranordnung erreicht wird. Dazu ist vorgesehen, dass der Filter an einem in Einbaulage unterhalb liegenden Filtersockel befestigt ist, in dem ein erster Kanal zur Zuführung von Schmieröl zum Filter, ein zweiter Kanal zur Abführung von Reinöl vom Filter zu den Schmierstellen und ein dritter Kanal zum Ablassen von Öl aus dem Innern des Filters in die Brennkraftmaschine sowie ein beim Wechsel des Filtereinsatzes zwangsläufig öffnender Durchgang vom Innern des Filtergehäuses zum dritten Kanal angeordnet sind. Der Durchgang ist in einem den unteren Teil des Filtergehäuses eng umgebenden Kragen des Filtersockels angeordnet und vom Filtergehäuse in dessen Einbaulage dichtend abgedeckt.

Das Dokument EP 2 412 417 A1 beschreibt ein Filterelement eines Filters zur Filtrierung von Fluiden, insbesondere Motoröl oder Kraftstoff einer Brennkraftmaschine insbesondere eines Kraftfahrzeugs, mit einem insbesondere sternförmig gefalteten Filtermedium in koaxialer Form. Die hier zu lösende Aufgabe besteht darin, ein Filterelement, einen Deckelkörper eines Filterelements und einen Filter auszugestalten, bei denen der Deckelkörper einfach und zuverlässig mit dem Filtermedium verbunden werden kann. Der Deckelkörper soll darüber hinaus kompakt aufgebaut sein, insbesondere sollen seine radialen Abmessungen möglichst gering sein. Zur Lösung dieser Aufgabe wird vorgeschlagen, dass das Filtermedium an einer Anschluss-Stirnseite einen Anschlussabschnitt mit einer Anschlussöffnung zu einem Innenraum des Filtermediums für ein Anschlussrohrstück eines Filtergehäuses aufweist. An dem Anschlussabschnitt ist ein Deckelkörper befestigt, der eine harte Deckelringscheibe aufweist. An der Deckelringscheibe ist zu dieser koaxial eine flexible ringartige Rücklaufsperrmembran befestigt. Ein zur Anschlussöffnung koaxialer Deckeldurchlass für das Anschlussrohrstück führt durch die Deckelringscheibe und die Rücklaufsperrmembran hindurch. Auf der Seite der Deckelringscheibe, die dem Filtermedium zugewandt ist, ist koaxial zum Deckeldurchlass ein Verbindungsrohrabschnitt angeordnet. Der Verbindungsrohrabschnitt steckt in der Anschlussöffnung. Er weist an seiner radial äußeren Umfangsseite eine sich wenigstens teilumfänglich erstreckende Wulst auf. Der Außendurchmesser der Wulst ist größer als der kleinste Durchmesser der Anschlussöffnung. Die Wulst und der Anschlussabschnitt sind zumindest zur Montage in radialer Richtung relativ zueinander elastisch verformbar. Durch das Anschlussrohrstück wird der Deckel auf dem Filtermedium zentriert.

Für die vorliegende Erfindung stellt sich daher die Aufgabe, einen Fluidfilter der eingangs genannten Art zu schaffen, der die aufgeführten Nachteile des Standes der Technik vermeidet und bei dem eine verbesserter Genauigkeit der Positionierung des freien Randes des Schraubgehäuse und der Dichtung auf der Dichtfläche des Anschlussflansches beim Anbauen des Filters erreicht wird. Außerdem soll ein geeigneter, zu dem Filter passender und auf diesen abgestimmter Filtereinsatz angegeben werden.

Die Lösung des ersten, den Fluidfilter betreffenden Teils der Aufgabe gelingt erfindungsgemäß mit einem Fluidfilter der eingangs genannten Art, der dadurch gekennzeichnet ist, dass der Filtereinsatz an seinem im Einbauzustand dem Anschlussflansch zugewandten Stirnendbereich erste Zentriermittel zur Zentrierung des Stirnendbereichs relativ zum Anschlussflansch aufweist und dass der Filtereinsatz am Außenumfang seines im Einbauzustand dem Anschlussflansch zugewandten Stirnendbereichs zweite Zentriermittel zur Zentrierung des freien Randes des Schraubgehäuses relativ zu der Dichtfläche des Anschlussflansches aufweist, wobei die zweiten Zentriermittel im Einbauzustand zentrierend mit dem freien Rand des Schraubgehäuses zusammenwirken.

Vorteilhaft wird mit der Erfindung erreicht, dass bei der Montage des Fluidfilters der freie Rand des Schraubgehäuses mit der Dichtung immer ausreichend exakt auf der zugehörigen Dichtfläche des Anschlussflansches zu liegen kommt, ohne dass dafür eine besondere Aufmerksamkeit des Bedienungspersonals nötig ist. Die gewünschte exakte Positionierung der Dichtung wird durch die gegenseitige Zentrierung verschiedener Teile des Fluidfilters gewährleistet. Dabei ist der Ausgangspunkt für die Zentrierung immer ein Teil des Anschlussflansches, von dem aus die gegenseitige Zentrierung nach Art einer Zentrierungskette über den Filtereinsatz bis zu dem freien Rand des Schraubgehäuses mit der Dichtung weitergeführt wird.

Hinsichtlich der Ausgestaltung des Fluidfilters und der Zentrierungskette gibt es verschiedene Möglichkeiten.

In einer ersten Ausgestaltung ist vorgesehen, dass mit der im Einbauzustand dem Anschlussflansch zugewandten Endscheibe des Filtereinsatzes radial außen ein im Querschnitt gesehen gestufter Zentrierring verbunden oder einstückig ausgebildet ist und dass der Zentrierring im Einbauzustand des Filtereinsatzes mit einem zum Anschlussflansch weisenden ersten Ringteil zentrierend in den Anschlussflansch eingreift und mit einem vom Anschlussflansch abgewandten zweiten Ringteil am Innenumfang des freien Randes des Schraubgehäuses dieses relativ zu der Dichtfläche des Anschlussflansches zentrierend anliegt. Der gestufte Zwischenring kann dabei einstückig sein oder alternativ durch zwei separate Ringteile gebildet sein, die jeweils für sich mit der Endscheibe des Filtereinsatzes verbunden oder einstückig ausgeführt sind.

Eine zweite Ausgestaltung des erfindungsgemäßen Fluidfilters sieht vor, dass an der im Einbauzustand dem Anschlussflansch zugewandten Endscheibe des Filtereinsatzes radial innen eine im Einbauzustand des Filtereinsatzes in den Anschlussflansch eingreifende und den Filtereinsatz relativ zum Anschlussflansch abdichtende und zentrierende Dichtlippe und radial außen ein Zentrierring angebracht oder einstückig angeformt sind und dass der Zentrierring im Einbauzustand des Filtereinsatzes und bei angeschraubtem Schraubgehäuse am Innenumfang des freien Randes des Schraubgehäuses dieses relativ zu der Dichtfläche des Anschlussflansches zentrierend anliegt.

Eine dritte Ausgestaltung des Fluidfilters ist dadurch gekennzeichnet, dass an der im Einbauzustand dem Anschlussflansch zugewandten Endscheibe des Filtereinsatzes radial innen eine im Einbauzustand des Filtereinsatzes am Außenumfang des Standrohrs anliegende und den Filtereinsatz relativ zum Standrohr abdichtende und zentrierende Dichtlippe und radial außen ein Zentrierring angebracht oder einstückig angeformt sind und dass der Zentrierring im Einbauzustand des Filtereinsatzes und bei angeschraubtem Schraubgehäuse am Innenumfang des freien Randes des Schraubgehäuses dieses relativ zu der Dichtfläche des Anschlussflansches zentrierend anliegt.

In einer weiteren Ausgestaltung des Fluidfilters ist vorgesehen, dass der Fluidfilter eine ein Rücklaufsperrventil und/oder ein Filterumgehungsventil bildende Ventileinheit mit einer dichtend auf dem Standrohr sitzenden, in ihrer Grundform kreisringscheibenförmigen Ventilplatte aufweist, dass die Ventilplatte an ihrer vom Anschlussflansch abgewandten Seite eine konzentrisch umlaufende Stufe oder Nut oder Rippe aufweist, dass an der im Einbauzustand dem Anschlussflansch zugewandten Endscheibe des Filtereinsatzes eine im Einbauzustand des Filtereinsatzes mit der Stufe oder Nut oder Rippe in Eingriff stehende konzentrische Ringstruktur und radial außen ein Zentrierring angebracht oder einstückig angeformt sind und dass der Zentrierring im Einbauzustand des Filtereinsatzes und bei angeschraubtem Schraubgehäuse am Innenumfang des freien Randes des Schraubgehäuses dieses relativ zu der Dichtfläche des Anschlussflansches zentrierend anliegt.

Eine letzte Ausgestaltung des Fluidfilters hinsichtlich der Zentrierungskette schlägt vor, dass an der im Einbauzustand dem Anschlussflansch zugewandten Endscheibe des Filtereinsatzes radial innen eine im Einbauzustand des Filtereinsatzes an einem Außenumfangsdichtbereich des Standrohrs anliegende und den Filtereinsatz relativ zum Standrohr abdichtende und zentrierende Dichtlippe oder eine in den Anschlussflansch eingreifende und den Filtereinsatz relativ zum Anschlussflansch abdichtende und zentrierende Dichtlippe angebracht oder einstückig angeformt ist, dass an dem im Einbauzustand dem Anschlussflansch zugewandten Endbereich des Filterstoffkörpers des Filtereinsatzes radial außen ein Zentrierring angebracht ist und dass der Zentrierring im Einbauzustand des Filtereinsatzes und bei angeschraubtem Schraubgehäuse am Innenumfang des freien Randes des Schraubgehäuses dieses relativ zu der Dichtfläche des Anschlussflansches zentrierend anliegt.

Für alle vorstehend angegebenen Ausgestaltungen des Fluidfilters ist bevorzugt vorgesehen, dass der Zentrierring Durchlassöffnungen aufweist, um bei der Zuführung von zu filterndem Fluid durch den Anschlussflansch eine ungehinderte Fluidströmung zum Außenumfang des Filterstoffkörpers des Filters zu ermöglichen.

Eine Weiterbildung dazu sieht vor, dass die Durchlassöffnungen im Zentrierring zum Außenumfang des Zentrierrings hin offen sind. Hierdurch wird insbesondere die Fertigung des Zentrierrings vereinfacht.

Die Lösung des zweiten, den Filtereinsatz zur Verwendung in dem Fluidfilter betreffenden Teils der Aufgabe gelingt erfindungsgemäß mit einem Filtereinsatz zur Verwendung in einem Fluidfilter nach einem der Ansprüche 1 bis 8, wobei der Filtereinsatz an seinem im Einbauzustand dem Anschlussflansch zugewandten Stirnendbereich erste Zentriermittel aufweist, mittels welcher der Stirnendbereichs relativ zum Anschlussflansch zentrierbar ist, und wobei der Filtereinsatz am Außenumfang seines im Einbauzustand dem Anschlussflansch zugewandten Stirnendbereichs zweite Zentriermittel aufweist, die im Einbauzustand des Filtereinsatzes zur Zentrierung des freien Randes des Schraubgehäuses relativ zu der Dichtfläche des Anschlussflansches mit dem freien Rand des Schraubgehäuses in Zentriereingriff bringbar sind, und wobei der Filtereinsatz erfindungsgemäß dadurch gekennzeichnet ist, dass an der im Einbauzustand dem Anschlussflansch zugewandten Endscheibe des Filtereinsatzes eine konzentrische Ringstruktur einstückig angeformt ist, die im Einbauzustand des Filtereinsatzes mit einer umlaufenden Stufe oder Nut oder Rippe an der vom Anschlussflansch abgewandten Seite einer dichtend auf dem Standrohr sitzenden, in ihrer Grundform kreisringscheibenförmigen Ventilplatte einer ein Rücklaufsperrventil und/oder ein Filterumgehungsventil bildenden Ventileinheit in Eingriff bringbar ist,
dass an der im Einbauzustand dem Anschlussflansch zugewandten Endscheibe des Filtereinsatzes radial außen ein Zentrierring angebracht oder einstückig angeformt ist, der im Einbauzustand des Filtereinsatzes und bei angeschraubtem Schraubgehäuse des zugehörigen Filters an den Innenumfang des freien Randes des Schraubgehäuses dieses relativ zu der Dichtfläche des Anschlussflansches zentrierend anlegbar ist,
dass der Zentrierring einen sich im Einbauzustand des Filtereinsatzes von der axial äußeren Seite der den Zentrierring aufweisenden Endscheibe in Richtung zur Dichtfläche des Anschlussflansches erstreckenden Bereich aufweist, von welchem eine an einem freien Rand eines Schraubgehäuse des Filters angeordnete Dichtung radial innen größtenteils einfassbar ist, und
dass der Zentrierring Durchlassöffnungen aufweist.

Der erfindungsgemäße Filtereinsatz bietet die auf den übrigen Fluidfilter und den Anschlussflansch abgestimmten und damit zusammenwirkenden Mittel, die zur Bildung einer Zentrierungskette innerhalb des angebauten Filters vom Anschlussflansch über den Filtereinsatz bis zum freien Rand des Schraubgehäuses mit der Dichtung erforderlich sind.

Vorteilhafte und bevorzugte Ausgestaltungen des Filtereinsatzes sind in den Ansprüchen 10 und 11 angegeben.

Der Fluidfilter und der zugehörige Filtereinsatz gemäß Erfindung sind für praktisch beliebige Filtrierungsaufgaben geeignet; besonders günstig ist eine Verwendung als Öl- oder Kraftstofffilter einer Brennkraftmaschine eines Kraftfahrzeuges.

Im Folgenden werden Ausführungsbeispiele der Erfindung anhand einer Zeichnung erläutert. Die Figuren der Zeichnung zeigen:
- Figur 1: einen an einen Anschlussflansch angebauten Fluidfilter mit Filtereinsatz, in einer ersten Ausführung, in einem Teil-Längsschnitt,
- Figur 2: den Fluidfilter aus Figur 1 in einem Teil-Querschnitt gemäß der Schnittlinie II-II in Figur 1,
- Figur 3: den an einen Anschlussflansch angebauten Fluidfilter mit Filtereinsatz, in einer zweiten Ausführung, in einem Teil-Längsschnitt,
- Figur 4: den Fluidfilter aus Figur 3 in einem Teil-Querschnitt gemäß der Schnittlinie IV-IV in Figur 3,
- Figur 5: den an einen Anschlussflansch angebauten Fluidfilter mit Filtereinsatz, in einer dritten Ausführung, in einem Teil-Längsschnitt,
- Figur 6: den Fluidfilter aus Figur 5 in einem Teil-Querschnitt gemäß der Schnittlinie VI-VI in Figur 5,
- Figur 7: den an einen Anschlussflansch angebauten Fluidfilter mit Filtereinsatz, in einer vierten Ausführung, in einem Teil-Längsschnitt,
- Figur 8: den Fluidfilter aus Figur 7 in einem Teil-Querschnitt gemäß der Schnittlinie VIII-VIII in Figur 7,
- Figur 9: den an einen Anschlussflansch angebauten Fluidfilter mit Filtereinsatz, in einer fünften Ausführung, in einem Teil-Längsschnitt, und
- Figur 10: den Fluidfilter aus Figur 9 in einem Teil-Querschnitt gemäß der Schnittlinie X-X in Figur 9.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

Übereinstimmend bei allen nachfolgend beschriebenen Fluidfiltern 1 ist, dass er an einen ein zentrales Standrohr 40 aufweisenden Anschlussflansch 4, z.B. einer Brennkraftmaschine, anbaubar bzw. in den Zeichnungsfiguren angebaut ist. Der Anschlussflansch 4 besitzt jeweils einen zentralen Rohrstutzen 40', an den mittels einer Verschraubung 41 das zentrale Standrohr 40 angeschraubt ist. Der Anschlussflansch 4 ist zu der Mittelachse 10 rotationssymmetrisch ausgebildet und besitzt einen radial äußeren Fluidzulaufkanal 42 sowie einen zentralen, zum Teil durch das Innere des Standrohrs 40 verlaufenden Fluidablaufkanal 43.

Der Fluidfilter 1 weist einen austauschbaren Filtereinsatz 3 mit einem hohlzylindrischen, stirnseitig von zwei Endscheiben 31 eingefassten Filterstoffkörper 30 auf, der mittels einer zentralen Durchbrechung 32 in der unteren, anschlussflanschseitigen Endscheibe 31 auf das Standrohr 40 aufgesteckt ist.

Weiter weist der Fluidfilter 1 ein becherförmiges Schraubgehäuse 2 auf, welches im Zentrum seines in der Zeichnung nicht sichtbaren, hier oben liegenden Bodens ein Schraubgewinde besitzt, das in dem in der Zeichnung gezeigten Anbauzustand mit einem am freien, oberen Ende des Standrohrs 40 angebrachten Gegengewinde verschraubt ist und welches an seinem freien, hier unteren Rand 20 eine Dichtung 22 trägt, mittels der das Schraubgehäuse 2 im montierten Zustand gegen eine Dichtfläche 45 des Anschlussflansches 4 abgedichtet ist.

Die Angaben "oben" und "unten" beziehen sich nur auf die in der Zeichnung dargestellte Ausrichtung des Fluidfilters 1; in der Praxis ist der Fluidfilter 1 in jeder beliebigen räumlichen Ausrichtung betriebsfähig.

Sowohl das Schraubgehäuse 2 als auch der Filtereinsatz 3 sind ebenfalls rotationssymmetrisch zu der Mittelachse 10 ausgeführt, wie dies an sich bekannt ist, sodass hier eine nur teilweise Darstellung des Filters 1 in den Zeichnungsfiguren ausreichend ist.

Die Dichtfläche 45 hat, wie die Zeichnung darstellt, in der Praxis häufig die Form eines relativ schmalen Steges, was eine exakte Positionierung des freien Randes 20 des Schraubgehäuses 2 mit der Dichtung 22 erfordert. Hierzu weist allgemein der Filtereinsatz 3 an seinem im Einbauzustand dem Anschlussflansch 4 zugewandten Stirnendbereich erste Zentriermittel 33 oder 34.1 oder 36 zur Zentrierung des Stirnendbereichs relativ zum Anschlussflansch 4 auf.

Weiter weist der Filtereinsatz 3 am Außenumfang seines im Einbauzustand dem Anschlussflansch 4 zugewandten Stirnendbereichs zweite Zentriermittel 34 oder 34.2 zur Zentrierung des freien Randes 20 des Schraubgehäuses 2 relativ zu der Dichtfläche 45 des Anschlussflansches 4 auf. Dabei wirken die zweiten Zentriermittel 34, 34.2 des Filtereinsatzes 3 im Einbauzustand zentrierend mit dem freien Rand 20 des Schraubgehäuses 2 zusammen.

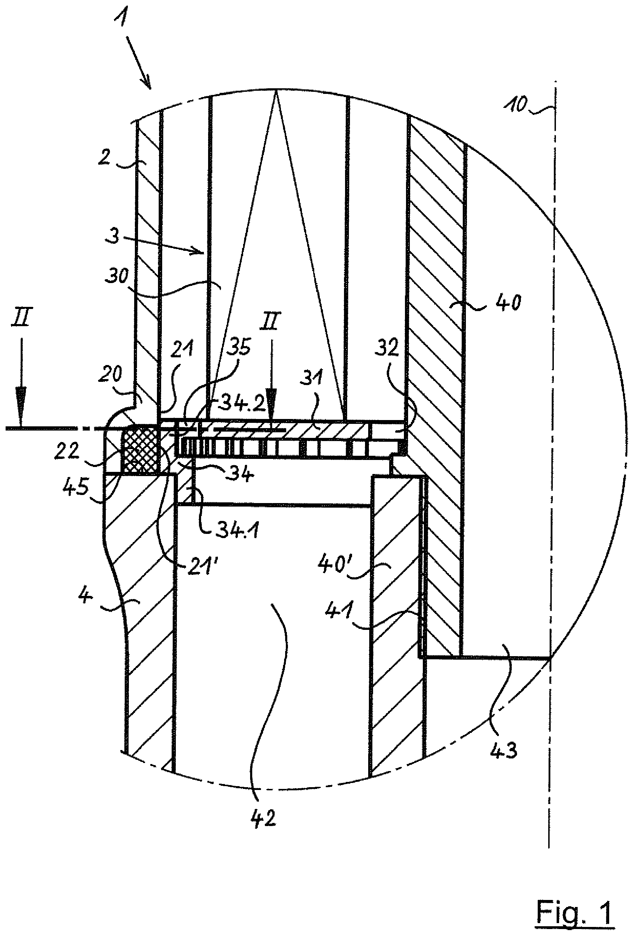

In den Figuren 1 bis 10 sind jeweils anhand zweier Zeichnungsfiguren fünf verschiedene Ausführungen des Fluidfilters 1 und des jeweils zugehörigen Filtereinsatzes 3 beispielhaft dargestellt.

Figur 1 zeigt einen an den Anschlussflansch 4 angebauten Fluidfilter 1 mit Filtereinsatz 3, in einer ersten Ausführung, in einem Teil-Längsschnitt. Bei diesem Fluidfilter 1 ist mit der im Einbauzustand dem Anschlussflansch 4 zugewandten Endscheibe 31 des Filtereinsatzes 3 radial außen ein im Querschnitt gesehen gestufter Zentrierring 34 verbunden oder einstückig ausgebildet.

Der Zentrierring 34 greift im Einbauzustand des Filtereinsatzes 3 mit einem zum Anschlussflansch 4 weisenden ersten Ringteil kleineren Durchmessers als erstes Zentriermittel 34.1 zentrierend in den Anschlussflansch 4, hier konkret in dessen Fluidzulaufkanal 42, ein. Mit einem vom Anschlussflansch 4 abgewandten zweiten Ringteil größeren Durchmessers als zweites Zentriermittel 34.2 liegt der Zentrierring 34 am Innenumfang 21 des freien Randes 20 des Schraubgehäuses 2 dieses relativ zu der Dichtfläche 45 des Anschlussflansches 4 zentrierend an. Die Dichtung 22 am freien Rand 20 des Schraubgehäuses 2 wird so exakt auf die Dichtfläche 45 des Anschlussflansches 4 ausgerichtet.

Dabei bildet die Außenumfangsfläche des zweiten Ringteils als zweites Zentriermittel 34.2 des Zentrierrings 34 eine radial innere Abstützfläche für den Innenumfang 21' der Dichtung 22. Radial außen und axial oben wird die Dichtung 22 vom freien Ende 20 des Schraubgehäuses 2 begrenzt, sodass im dargestellten Anbauzustand die Dichtung 22 sicher gegen die Dichtfläche 45 abdichtend angedrückt wird.

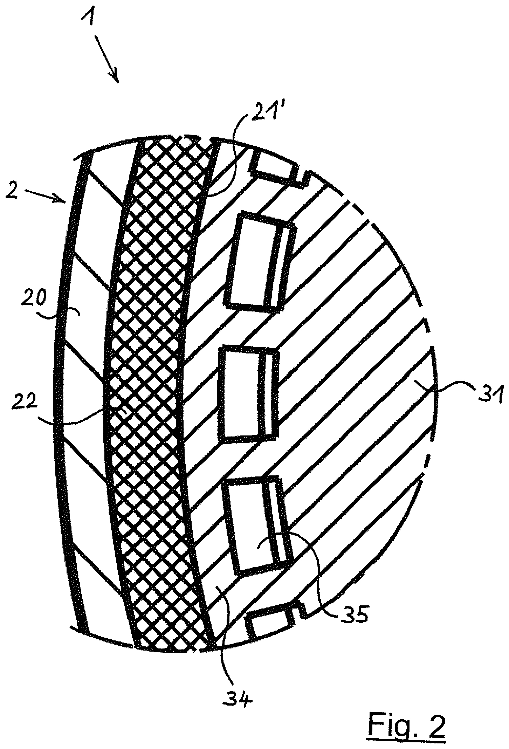

Figur 2 zeigt den Filter 1 aus Figur 1 in einem Teil-Querschnitt gemäß der Schnittlinie II-II in Figur 1. Links in Figur 2 ist ein Teil des Schraubgehäuses 2 mit dessen freiem Rand 20 erkennbar. Radial innen, das heißt in Figur 2 rechts, vom freien Rand 20 verläuft die Dichtung 22. An deren Innenumfang 21' liegt der Zentrierring 34 mit seinem Außenumfang an. Der Zentrierring 34 ist hier einstückig mit der Endscheibe 31 des hier im Übrigen nicht sichtbaren Filtereinsatzes 3 ausgeführt. Zur Ermöglichung einer Fluidströmung ist der Zentrierring 34 mit einem Kranz von Durchlassöffnungen 35 versehen, die hier innerhalb des Zentrierrings 34 liegen.

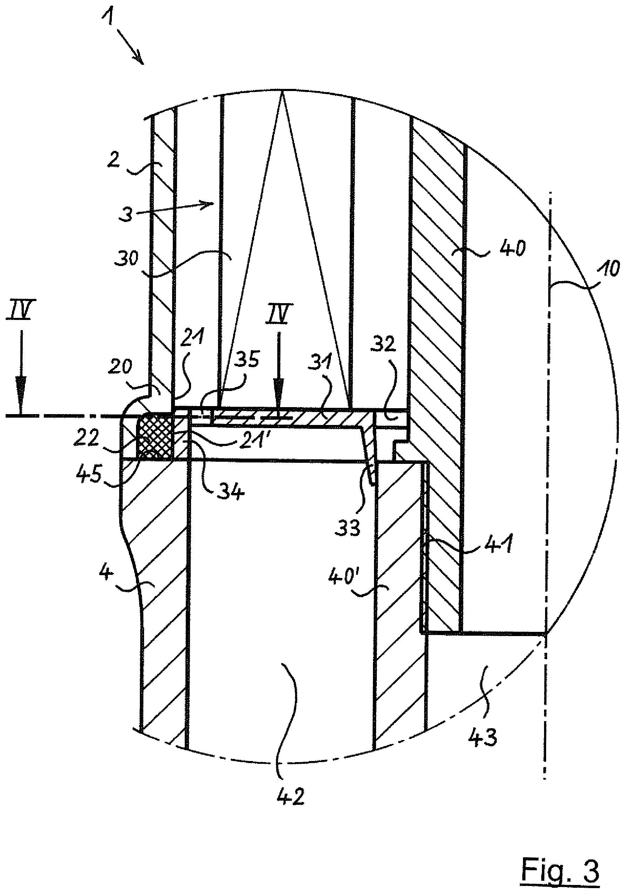

Figur 3 zeigt den an einen Anschlussflansch 4 angebauten Filter 1 mit Filtereinsatz 3 in einer zweiten Ausführung, in einem Teil-Längsschnitt. Der Filtereinsatz 3 ist mit seiner unteren Endscheibe 31 voran mit seiner zentralen Durchbrechung 32 auf das Standrohr 40 aufgesteckt. An der im Einbauzustand dem Anschlussflansch 4 zugewandten Endscheibe 31 des Filtereinsatzes 3 ist radial innen eine im Einbauzustand des Filtereinsatzes 3 in den Anschlussflansch 4, hier konkret in dessen Fluidzulaufkanal 42, eingreifende und den Filtereinsatz 3 relativ zum Anschlussflansch 4 abdichtende und zentrierende Dichtlippe 33 einstückig angeformt.

Radial außen ist an der Endscheibe 31 ein Zentrierring 34 angebracht oder einstückig angeformt. Der Zentrierring 34 im Einbauzustand des Filtereinsatzes 3 und bei angeschraubtem Schraubgehäuse 2 am Innenumfang 21 des freien Randes 20 des Schraubgehäuses 2 dieses relativ zu der Dichtfläche 45 des Anschlussflansches 4 zentrierend an.

Um die Dichtung 22 radial innen an ihrem Innenumfang 21' abzustützen, erstreckt sich der Zentrierring 34 von der Endscheibe 31 noch um ein Stück weit nach unten bis zur Dichtfläche 45 des Anschlussflansches 4.

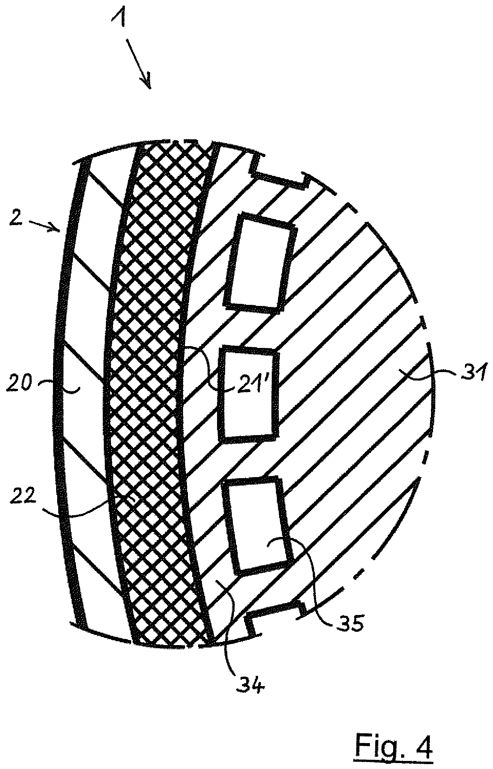

Figur 4 zeigt den Filter 1 aus Figur 3 in einem Teil-Querschnitt gemäß der Schnittlinie IV-IV in Figur 3. Links in Figur 4 ist ein Teil des Schraubgehäuses 2 mit dessen freiem Rand 20 erkennbar. Radial innen, das heißt in Figur 4 rechts, vom freien Rand 20 verläuft die Dichtung 22. An deren Innenumfang 21' liegt der Zentrierring 34 mit seinem Außenumfang an. Der Zentrierring 34 ist hier wieder einstückig mit der Endscheibe 31 des Filtereinsatzes 3 ausgeführt und auch wieder mit einem Kranz von innerhalb des Zentrierrings 34 liegenden Durchlassöffnungen 35 versehen.

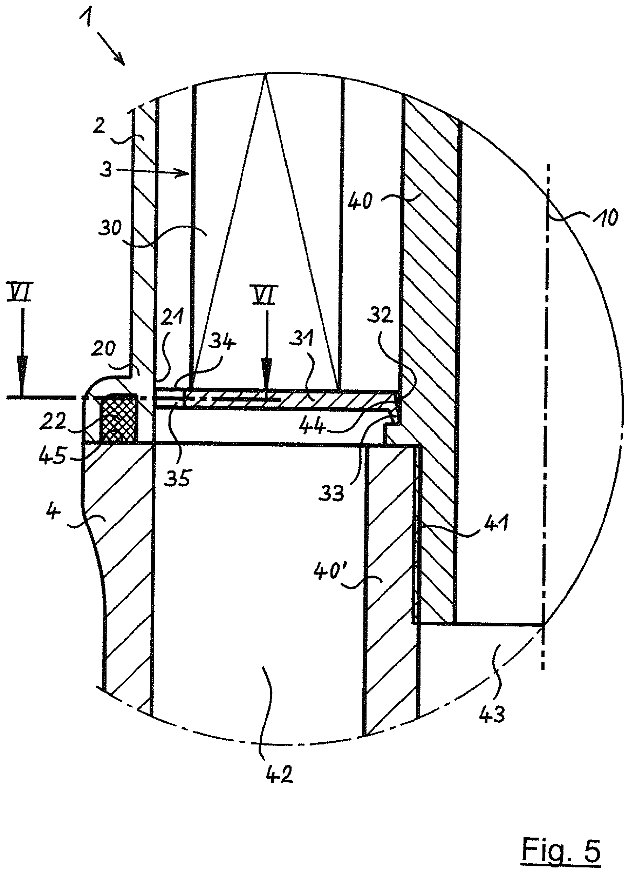

Figur 5 zeigt den an einen Anschlussflansch 4 angebauten Filter 1 mit Filtereinsatz 3, in einer dritten Ausführung, in einem Teil-Längsschnitt. An der im Einbauzustand dem Anschlussflansch 4 zugewandten Endscheibe 31 des Filtereinsatzes 3 ist radial innen eine im Einbauzustand des Filtereinsatzes 3 am Außenumfang des Standrohrs 40 anliegende und den Filtereinsatz 3 relativ zum Standrohr 40 abdichtende und zentrierende Dichtlippe 33 einstückig angeformt. Radial außen an der Endscheibe 31 ist ein Zentrierring 34 angebracht oder einstückig angeformt. Der Zentrierring 34 liegt im Einbauzustand des Filtereinsatzes 3 und bei angeschraubtem Schraubgehäuse 2 am Innenumfang 21 des freien Randes 20 des Schraubgehäuses 2 dieses relativ zu der Dichtfläche 45 des Anschlussflansches 4 zentrierend an.

Die Dichtung 22 ist hier in einer nach unten hin, d.h. zur Dichtfläche 45 des Anschlussflansches 4 hin, offenen Nut angeordnet und somit an drei Seiten vom freien Rand 20 des Schraubgehäuses 2 eingefasst. Dadurch kann die Dichtung 22 auch hier im Montagezustand, wie in Figur 5 gezeigt, nicht ausweichen, sondern wird zuverlässig an die Dichtfläche 45 angedrückt.

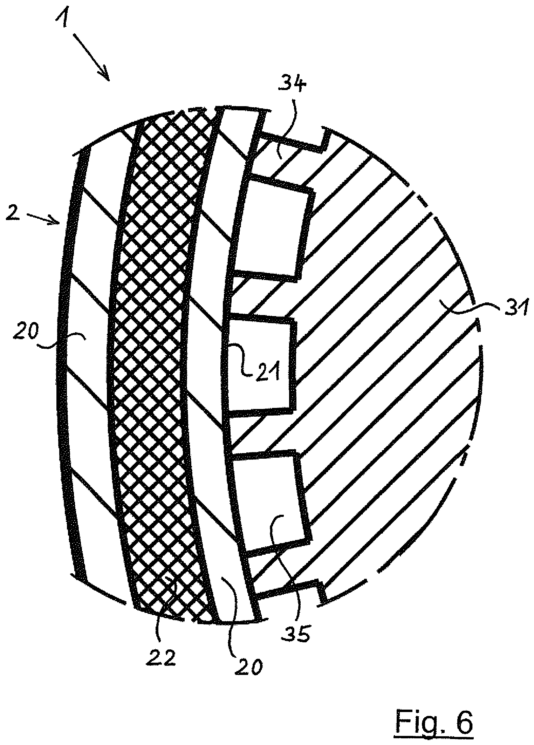

Figur 6 zeigt den Filter 1 aus Figur 5 in einem Teil-Querschnitt gemäß der Schnittlinie VI-VI in Figur 5. Links in Figur 6 ist ein Teil des Schraubgehäuses 2 mit dessen freiem Rand 20 erkennbar. Radial innen, das heißt in Figur 6 rechts, vom freien Rand 20 verläuft die Dichtung 22. Radial innen von der Dichtung 22 ist ein radial innerer Teil des freien Randes 20 des Schraubgehäuses 2 sichtbar. An dessen Innenumfang 21 liegt der Zentrierring 34 mit seinem Außenumfang an. Der Zentrierring 34 ist hier wieder einstückig mit der Endscheibe 31 des Filtereinsatzes 3 ausgeführt und auch wieder mit einem Kranz von Durchlassöffnungen 35 versehen, die hier aber zum Außenumfang des Zentrierrings 34 hin offen sind.

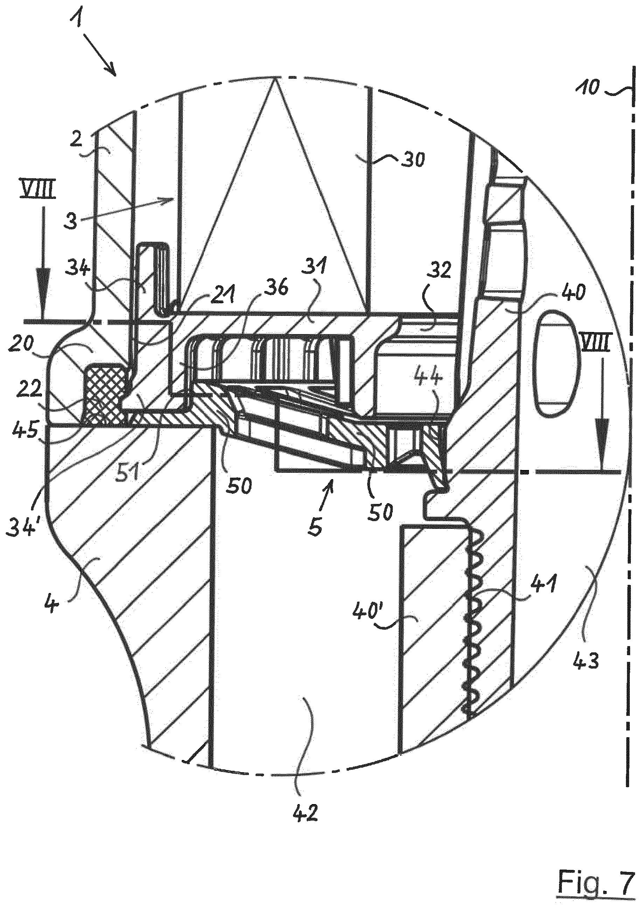

Figur 7 zeigt den an einen Anschlussflansch 4 angebauten Filter 1 mit Filtereinsatz 3, in einer vierten Ausführung, in einem Teil-Längsschnitt. Der Fluidfilter 1 weist hier eine ein Rücklaufsperrventil und/oder ein Filterumgehungsventil bildende Ventileinheit 5 mit einer dichtend auf dem Standrohr 40 sitzenden, in ihrer Grundform kreisringscheibenförmigen Ventilplatte 50 auf. Die Ventilplatte 50 weist an ihrer vom Anschlussflansch 4 abgewandten Seite eine konzentrisch umlaufende Stufe 51 oder Nut oder Rippe auf. An der im Einbauzustand dem Anschlussflansch 4 zugewandten Endscheibe 31 des Filtereinsatzes 3 ist eine im Einbauzustand des Filtereinsatzes 3 mit der Stufe 51 oder Nut oder Rippe in Eingriff stehende konzentrische Ringstruktur 36 einstückig angeformt.

Radial außen an der Endscheibe 31 ist ein Zentrierring 34 angebracht oder einstückig angeformt. Der Zentrierring 34 liegt im Einbauzustand des Filtereinsatzes 3 und bei angeschraubtem Schraubgehäuse 2 am Innenumfang 21 des freien Randes 20 des Schraubgehäuses 2 dieses relativ zu der Dichtfläche 45 des Anschlussflansches 4 zentrierend an.

Die Dichtung 22 wird auch hier zwangsweise exakt zur zugehörigen Dichtfläche 45 positioniert. Axial oben und radial außen ist die Dichtung 22 vom freien Rand 20 des Schraubgehäuses 2 eingefasst. Radial innen ist die Dichtung 22 größtenteils von einem sich in Richtung zur Dichtfläche 45 erstreckenden Bereich 34' des Zentrierrings 34 eingefasst. Zwischen einer unteren Stirnseite des Zentrierrings 34 und der Dichtfläche 45 des Anschlussflansches 4 liegt hier noch ein flacher Flanschteil der Ventilplatte 50, dessen Außenumfang einen unteren Teil der radial inneren Einfassung für die Dichtung 22 bildet.

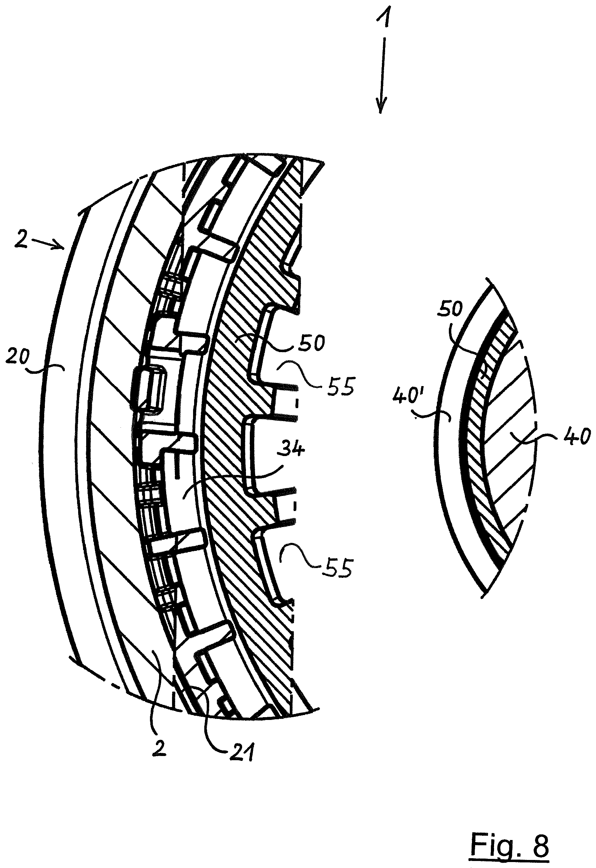

Figur 8 zeigt den Filter 1 aus Figur 7 in einem Teil-Querschnitt gemäß der Schnittlinie VIII-VIII in Figur 7. Links in Figur 8 ist ein Teil des Schraubgehäuses 2 mit dessen freiem Rand 20 erkennbar. Radial innen, das heißt in Figur 8 rechts, vom freien Rand 20 verläuft der Zentrierring 34. Die Dichtung 22 liegt hier unter der Schnittebene und ist deshalb nicht sichtbar.

Radial innen vom Zentrierring 34 ist die Ventilplatte 50 erkennbar, die mit Ventilöffnungen 55 versehen ist. Noch weiter rechts, das heißt weiter radial innen, ist in Figur 8 der radial äußere Teil des oberen Endes des Rohrstutzens 40' des Anschlussflansches 4 sichtbar. Radial innen vom Rohrstutzen 40' ist nochmals die Ventilplatte 50, nun in ihrem radial innersten Randbereich, geschnitten. Ganz rechts in Figur 8 ist schließlich noch ein Teil des zentralen Standrohrs 40 im Schnitt sichtbar.

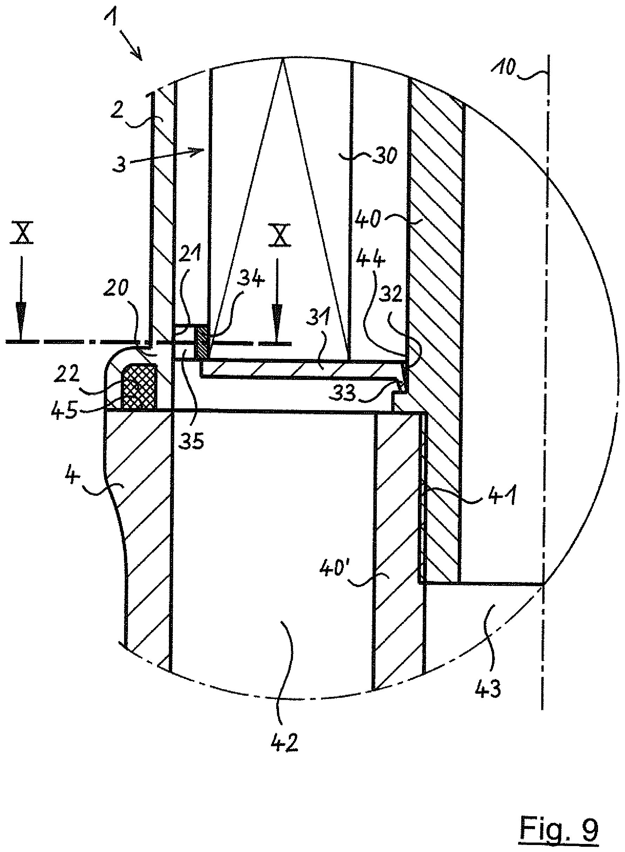

Figur 9 zeigt den an einen Anschlussflansch 4 angebauten Filter 1 mit Filtereinsatz 3, in einer fünften Ausführung, wieder in einem Teil-Längsschnitt. An der im Einbauzustand dem Anschlussflansch 4 zugewandten Endscheibe 31 des Filtereinsatzes 3 ist radial innen eine im Einbauzustand des Filtereinsatzes 3 an einem Außenumfangsdichtbereich 44 des Standrohrs 40 anliegende und den Filtereinsatz 3 relativ zum Standrohr 40 abdichtende und zentrierende Dichtlippe 33 einstückig angeformt.

An dem im Einbauzustand dem Anschlussflansch 4 zugewandten Endbereich des Filterstoffkörpers 30 des Filtereinsatzes 3 ist radial außen ein Zentrierring 34 angebracht. Der Zentrierring 34 liegt im Einbauzustand des Filtereinsatzes 3 und bei angeschraubtem Schraubgehäuse 2 am Innenumfang 21 des freien Randes 20 des Schraubgehäuses 2 dieses relativ zu der Dichtfläche 45 des Anschlussflansches 4 zentrierend an.

Der hier am Filterstoffkörper 30 des Filtereinsatzes 3 angebrachte Zentrierring 34 kann mit dem Filterstoffkörper 30 verklebt oder verschweißt oder verklemmt sein, damit der Zentrierring 34 seine gewünschte axiale Position nahe oder unmittelbar an der unteren Endscheibe 31 beim Zusammenbau des Filters 1 sicher beibehält. Alternativ oder zusätzlich kann hier der Zentrierring 34 am radial inneren Bereich seiner unteren Stirnseite mit dem radial äußeren Randbereich der Endscheibe 31 verbunden sein, beispielsweise durch Verschweißung oder Verklebung.

Die Dichtung 22 ist hier in einer nach unten hin, d.h. zur Dichtfläche 45 des Anschlussflansches 4 hin, offenen Nut im Rand 20 des Schraubgehäuses 2 angeordnet und somit an drei Seiten vom freien Rand 20 des Schraubgehäuses 2 eingefasst. Dadurch kann die Dichtung 22 im Montagezustand, wie in Figur 9 gezeigt, nicht ausweichen, sondern wird zuverlässig und exakt positioniert an die Dichtfläche 45 angedrückt.

Zur Ermöglichung einer Fluidströmung vom Fluidzulaufkanal 42 zum Außenumfang des Filterstoffkörpers 30 besitzt der Zentrierring 34 hier wieder axiale Durchlassöffnungen 35.

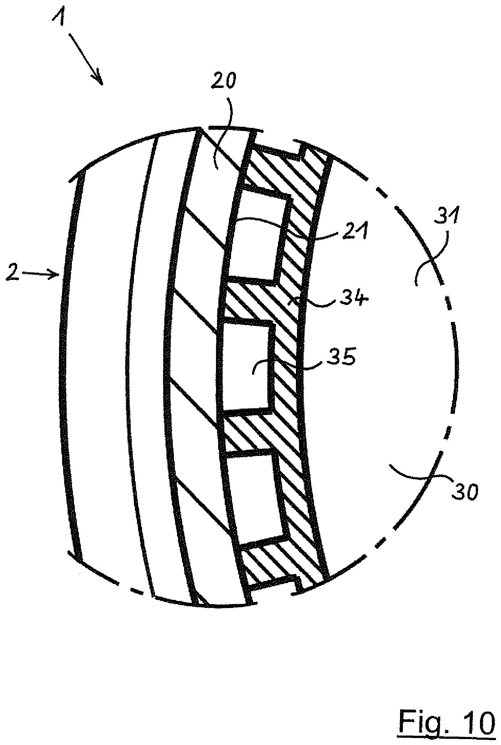

Figur 10 schließlich zeigt den Filter 1 aus Figur 9 in einem Teil-Querschnitt gemäß der Schnittlinie X-X in Figur 9. Links in Figur 10 ist ein Teil des Schraubgehäuses 2 mit dessen freiem Rand 20 erkennbar. Radial innen, das heißt in Figur 10 rechts, vom freien Rand 20 verläuft, am Innenumfang 21 des Randes 20 diesen zentrierend anliegend, der Zentrierring 34 mit hier radial nach außen hin offenen Durchlassöffnungen 35. Die Dichtung 22 liegt hier unterhalb der Schnittebene und ist deshalb nicht sichtbar. Radial innen vom Zentrierring 34 ist noch ein Teil der unteren Endscheibe 31 mit dem Filterstoffkörper 30 des Filtereinsatzes 3 sichtbar.

### Bezugszeichenliste:

| Zeichen | Bezeichnung |
|---|---|
| 1 | Fluidfilter |
| 10 | Mittelachse |
| 2 | Schraubgehäuse |
| 20 | freier Rand von 2 |
| 21 | Innenumfang von 20 |
| 21' | Innenumfang von 22 |
| 22 | Dichtung an 20 |
| 3 | Filtereinsatz |
| 30 | Filterstoffkörper |
| 31 | Endscheibe |
| 32 | zentrale Durchbrechung in 31 |
| 33 | Dichtlippe an 32 |
| 34 | Zentrierring |
| 34' | radial innen von 22 liegender Bereich von 34 |
| 34.1, 34.2 | erstes, zweites Zentriermittel an 34 |
| 35 | Durchlassöffnungen in 34 |
| 36 | Ringstruktur an 31 |
| 4 | Anschlussflansch |
| 40 | zentrales Standrohr |
| 40' | Rohrstutzen |
| 41 | Verschraubung |
| 42 | Fluidzulaufkanal |
| 43 | Fluidrücklaufkanal |
| 44 | Außenumfangsdichtbereich von 40 |
| 45 | Dichtfläche an 4 für 22 |
| 5 | Ventileinheit |
| 50 | Ventilplatte |
| 51 | Stufe an 50 |
| 55 | Ventilöffnungen in 50 |

## Patentansprüche

1. Fluidfilter (1), der an einen ein zentrales Standrohr (40) aufweisenden Anschlussflansch (4) anbaubar ist, wobei der Fluidfilter (1) einen austauschbaren Filtereinsatz (3) mit einem hohlzylindrischen, stirnseitig von zwei Endscheiben (31) eingefassten Filterstoffkörper (30) aufweist, der auf das Standrohr (40) aufsteckbar ist, und wobei der Fluidfilter (1) ein becherförmiges Schraubgehäuse (2) aufweist, welches im Zentrum seines Bodens ein Schraubgewinde besitzt, das mit einem am freien Ende des Standrohrs (40) angebrachten Gegengewinde verschraubbar ist, und welches an seinem freien Rand (20) eine Dichtung (22) trägt, mittels der das Schraubgehäuse (2) im montierten Zustand gegen eine Dichtfläche (45) des Anschlussflansches (4) abdichtbar ist,
**dadurch gekennzeichnet,**
**dass** der Filtereinsatz (3) an seinem im Einbauzustand dem Anschlussflansch (4) zugewandten Stirnendbereich erste Zentriermittel (33, 34.1, 36) zur Zentrierung des Stirnendbereichs relativ zum Anschlussflansch (4) aufweist und dass der Filtereinsatz (3) am Außenumfang seines im Einbauzustand dem Anschlussflansch (4) zugewandten Stirnendbereichs zweite Zentriermittel (34, 34.2) zur Zentrierung des freien Randes (20) des Schraubgehäuses (2) relativ zu der Dichtfläche (45) des Anschlussflansches (4) aufweist, wobei die zweiten Zentriermittel (34, 34.2) im Einbauzustand zentrierend mit dem freien Rand (20) des Schraubgehäuses (2) zusammenwirken.

2. Fluidfilter nach Anspruch 1, **dadurch gekennzeichnet, dass** mit der im Einbauzustand dem Anschlussflansch (4) zugewandten Endscheibe (31) des Filtereinsatzes (3) radial außen ein im Querschnitt gesehen gestufter Zentrierring (34) verbunden oder einstückig ausgebildet ist und dass der Zentrierring (34) im Einbauzustand des Filtereinsatzes (3) mit einem zum Anschlussflansch (4) weisenden ersten Ringteil (34.1) zentrierend in den Anschlussflansch (4) eingreift und mit einem vom Anschlussflansch (4) abgewandten zweiten Ringteil (34.2) am Innenumfang (21) des freien Randes (20) des Schraubgehäuses (2) dieses relativ zu der Dichtfläche (45) des Anschlussflansches (4) zentrierend anliegt.

3. Fluidfilter nach Anspruch 1, **dadurch gekennzeichnet, dass** an der im Einbauzustand dem Anschlussflansch (4) zugewandten Endscheibe (31) des Filtereinsatzes (3) radial innen eine im Einbauzustand des Filtereinsatzes (3) in den Anschlussflansch (4) eingreifende und den Filtereinsatz (3) relativ zum Anschlussflansch (4) abdichtende und zentrierende Dichtlippe (33) und radial außen ein Zentrierring (34) angebracht oder einstückig angeformt sind und dass der Zentrierring (34) im Einbauzustand des Filtereinsatzes (3) und bei angeschraubtem Schraubgehäuse (2) am Innenumfang (21) des freien Randes (20) des Schraubgehäuses (2) dieses relativ zu der Dichtfläche (45) des Anschlussflansches (4) zentrierend anliegt.

4. Fluidfilter nach Anspruch 1, **dadurch gekennzeichnet, dass** an der im Einbauzustand dem Anschlussflansch (4) zugewandten Endscheibe (31) des Filtereinsatzes (3) radial innen eine im Einbauzustand des Filtereinsatzes (3) am Außenumfang des Standrohrs (40) anliegende und den Filtereinsatz (3) relativ zum Standrohr (40) abdichtende und zentrierende Dichtlippe (33) und radial außen ein Zentrierring (34) angebracht oder einstückig angeformt sind und dass der Zentrierring (34) im Einbauzustand des Filtereinsatzes (3) und bei angeschraubtem Schraubgehäuse (2) am Innenumfang (21) des freien Randes (20) des Schraubgehäuses (2) dieses relativ zu der Dichtfläche (45) des Anschlussflansches (4) zentrierend anliegt.

5. Fluidfilter nach Anspruch 1, **dadurch gekennzeichnet, dass** der Fluidfilter (1) eine ein Rücklaufsperrventil und/oder ein Filterumgehungsventil bildende Ventileinheit (5) mit einer dichtend auf dem Standrohr (40) sitzenden, in ihrer Grundform kreisringscheibenförmigen Ventilplatte (50) aufweist, dass die Ventilplatte (50) an ihrer vom Anschlussflansch (4) abgewandten Seite eine konzentrisch umlaufende Stufe (51) oder Nut oder Rippe aufweist, dass an der im Einbauzustand dem Anschlussflansch (4) zugewandten Endscheibe (31) des Filtereinsatzes (3) eine im Einbauzustand des Filtereinsatzes (3) mit der Stufe (51) oder Nut oder Rippe in Eingriff stehende konzentrische Ringstruktur (36) und radial außen ein Zentrierring (34) angebracht oder einstückig angeformt sind und dass der Zentrierring (34) im Einbauzustand des Filtereinsatzes (3) und bei angeschraubtem Schraubgehäuse (2) am Innenumfang (21) des freien Randes (20) des Schraubgehäuses (2) dieses relativ zu der Dichtfläche (45) des Anschlussflansches (4) zentrierend anliegt.

6. Fluidfilter nach Anspruch 1, **dadurch gekennzeichnet, dass** an der im Einbauzustand dem Anschlussflansch (4) zugewandten Endscheibe (31) des Filtereinsatzes (3) radial innen eine im Einbauzustand des Filtereinsatzes (3) an einem Außenumfangsdichtbereich (44) des Standrohrs (40) anliegende und den Filtereinsatz (3) relativ zum Standrohr (40) abdichtende und zentrierende Dichtlippe (33) oder eine in den Anschlussflansch (4) eingreifende und den Filtereinsatz (3) relativ zum Anschlussflansch (4) abdichtende und zentrierende Dichtlippe (33) angebracht oder einstückig angeformt ist, dass an dem im Einbauzustand dem Anschlussflansch (4) zugewandten Endbereich des Filterstoffkörpers (30) des Filtereinsatzes (3) radial außen ein Zentrierring (34) angebracht ist und dass der Zentrierring (34) im Einbauzustand des Filtereinsatzes (3) und bei angeschraubtem Schraubgehäuse (2) am Innenumfang (21) des freien Randes (20) des Schraubgehäuses (2) dieses relativ zu der Dichtfläche (45) des Anschlussflansches (4) zentrierend anliegt.

7. Fluidfilter nach einem der Ansprüche 2 bis 6, **dadurch gekennzeichnet, dass** der Zentrierring (34) Durchlassöffnungen (35) aufweist.

8. Fluidfilter nach Anspruch 7, **dadurch gekennzeichnet, dass** die Durchlassöffnungen (35) im Zentrierring (34) zum Außenumfang des Zentrierrings (34) hin offen sind.

9. Filtereinsatz (3) zur Verwendung in einem Fluidfilter (1) nach einem der Ansprüche 1 bis 8, wobei der Filtereinsatz (3) an seinem im Einbauzustand dem Anschlussflansch (4) zugewandten Stirnendbereich erste Zentriermittel (36) aufweist, mittels welcher der Stirnendbereichs relativ zum Anschlussflansch (4) zentrierbar ist, und wobei der Filtereinsatz (3) am Außenumfang seines im Einbauzustand dem Anschlussflansch (4) zugewandten Stirnendbereichs zweite Zentriermittel (34, 34.2) aufweist, die im Einbauzustand des Filtereinsatzes (3) zur Zentrierung des freien Randes (20) des Schraubgehäuses (2) relativ zu der Dichtfläche (45) des Anschlussflansches (4) mit dem freien Rand (20) des Schraubgehäuses (2) in Zentriereingriff bringbar sind,
**dadurch gekennzeichnet,**
**dass** an der im Einbauzustand dem Anschlussflansch (4) zugewandten Endscheibe (31) des Filtereinsatzes (3) eine konzentrische Ringstruktur (36) einstückig angeformt ist, die im Einbauzustand des Filtereinsatzes (3) mit einer umlaufenden Stufe (51) oder Nut oder Rippe an der vom Anschlussflansch (4) abgewandten Seite einer dichtend auf dem Standrohr (40) sitzenden, in ihrer Grundform kreisringscheibenförmigen Ventilplatte (50) einer ein Rücklaufsperrventil und/oder ein Filterumgehungsventil bildenden Ventileinheit (5) in Eingriff bringbar ist,
**dass** an der im Einbauzustand dem Anschlussflansch (4) zugewandten Endscheibe (31) des Filtereinsatzes (3) radial außen ein Zentrierring (34) angebracht oder einstückig angeformt ist, der im Einbauzustand des Filtereinsatzes (3) und bei angeschraubtem Schraubgehäuse (2) des zugehörigen Filters (1) an den Innenumfang (21) des freien Randes (20) des Schraubgehäuses (2) dieses relativ zu der Dichtfläche (45) des Anschlussflansches (4) zentrierend anlegbar ist,
**dass** der Zentrierring (34) einen sich im Einbauzustand des Filtereinsatzes (3) von der axial äußeren Seite der den Zentrierring (34) aufweisenden Endscheibe (31) in Richtung zur Dichtfläche (45) des Anschlussflansches (4) erstreckenden Bereich (34') aufweist, von welchem eine an einem freien Rand (20) eines Schraubgehäuse (2) des Filters (1) angeordnete Dichtung (22) radial innen größtenteils einfassbar ist, und
**dass** der Zentrierring (34) Durchlassöffnungen (35) aufweist.

10. Filtereinsatz nach Anspruch 9, **dadurch gekennzeichnet, dass** die Durchlassöffnungen (35) im Zentrierring (34) zum Außenumfang des Zentrierrings (34) hin offen sind.

11. Filtereinsatz nach Anspruch 9 oder 10, **dadurch gekennzeichnet, dass** sich der Zentrierring (34) von der Endscheibe (31) nach unten im Einbauzustand bis zur Dichtfläche (45) des Anschlussflansches (4) oder bis zu einem flachen, im Einbauzustand zwischen einer unteren Stirnseite des Zentrierrings (34) und der Dichtfläche (45) des Anschlussflansches (4) liegenden Flanschteil der Ventilplatte (50) erstreckt.

## Claims

1. Fluid filter (1) attachable to a connection flange (4) with a central standpipe (40), wherein the fluid filter (1) comprises an exchangeable filter insert (3) with a hollow-cylindrical filter material body (30) that is enclosed on the end faces by two end discs (31) and can be plugged onto the standpipe (40), and wherein the fluid filter (1) has a cup-shaped screw-on housing (2) with a screw thread in the centre of its bottom that is attachable by screwing onto a counter-thread on a free end of the standpipe (40), and with a seal (22) supported on the free edge (20) of the screw-on housing, by means of which the screw-on housing (2) when installed is sealable against a sealing surface (45) of the connection flange (4),
**characterised in that**
for centring the end face area relative to the connection flange (4), the filter insert (3) has first centring means (33, 34.1, 36) on the area of the end face that faces the connection flange (4) in the installed state, and that for centring the free edge (20) of the screw-on housing (2) relative to the sealing surface (45) of the connection flange (4), the filter insert (3) has second centring means (34, 34.2) on the outer periphery of its end face area facing the connection flange (4) when in the installed state, wherein the second centring means (34, 34.2) interacts with the free edge (20) of the screw-on housing (2), thus centring the same.

2. The fluid filter according to claim 1, **characterised in that** a centring ring (34) with a step-like cross-section is radially outwardly attached to or integral with the end disc (31) facing the connection flange (4) in the installed state, and that with the filter insert (3) in place the centring ring (34) centringly engages the connection flange (4) by means of a first ring section (34.1) facing the connection flange (4), and abuts the screw-on housing (2) at the inner circumference (21) of its free edge (20) by means of a second ring section (34.2) facing away from the connection flange (4), centring the same relative to the sealing surface (45) of the connection flange (4).

3. The fluid filter according to claim 1, **characterised in that** radially inwardly a sealing lip (33) and a radially outwardly a centring ring (34) are attached to or integral with the end disc (31) of the filter insert (3) facing the connection flange (4) in the installed state of the filter insert (3), with said sealing lip (33) radially inwardly engaging the connection flange (4) when the filter insert (3) is installed and sealing and centring the filter insert (3) relative to the connection flange (4), and that with the screw-on housing (2) screwed on and the filter insert (3) in place, the centring ring (34) abuts the screw-on housing (2) at the inner circumference (21) of the free edge (20) of the screw-on housing (2), centring the same relative to the sealing surface (45) of the connection flange (4).

4. The fluid filter according to claim 1, **characterised in that** radially inwardly a sealing lip (33) and radially outwardly a centring ring (34) are attached to or integral with the end disc (31) of the filter insert (3) facing the connection flange (40) when the filter insert (3) is installed, with said sealing lip (33) radially inwardly abutting the outer circumference of the standpipe (40) in the installed state of the filter insert (3), sealing and centring the filter insert (3) relative to the standpipe (40); and that with the filter insert (3) in place and with the screw-on housing (2) screwed on, the centring ring (34) abuts the screw-on housing (2) at the inner circumference (21) of the free edge (20) of the screw-on housing (2), centring the same relative to the sealing surface (45) of the connection flange (4).

5. The fluid filter according to claim 1, **characterised in that** the fluid filter (1) comprises a valve unit (5) forming a non-return valve and/or a filter bypass valve with a valve plate (50) sealingly seated on the standpipe (40) and having the basic shape of a circular ring disc, that the valve plate (50) has a concentric step (51) or groove or rib on its side facing away from the connection flange (4), that a concentric ring structure (36) engaging the step (51) or groove or rib when the filter insert (3) is installed, and radially outwardly a centring ring (34) are attached to or integral with the end disc (31) of the filter insert (3) facing the connection flange (4) when installed, and that with the filter insert (3) in place and with the screw-on housing (2) screwed on, the centring ring (34) abuts the screw-on housing (2) at the inner circumference (21) of the free edge (20) of the screw-on housing (2), centring the same relative to the sealing surface (45) of the connection flange (4).

6. The fluid filter according to claim 1, **characterised in that** a sealing lip (33) radially inwardly abutting an outer circumferential sealing area (44) of the standpipe (40) and sealing and centring the filter insert (3) relative to the standpipe (40), or a sealing lip (33) engaging the connection flange (4) and sealing and centring the filter insert (3) relative to the connection flange (4) is attached to or integral with the end disc (31) of the filter insert (3) facing the connection flange (4) in the installed state, that a centring ring (34) is radially outwardly attached to the end area of the filter material body (30) of the filter insert (3), which end area faces the connection flange (4), and that with the filter insert (3) in place and with the screw-on housing (2) screwed on, the centring ring (34) abuts the screw-on housing (2) at the inner circumference (21) of free edge (20) of the screw-on housing (2), centring the same relative to the sealing surface (45) of the connection flange (4).

7. The fluid filter according to one of claims 2 to 6, **characterized in that** the centring ring (34) has passage openings (35).

8. The fluid filter according to claim 7, **characterized in that** the passage openings (35) in the centring ring (34) are open towards the outer circumference of the centring ring (34).

9. Filter insert (3) for use in a fluid filter (1) according to one of claims 1 to 8, wherein the filter insert (3) has first centring means (36) on its end face area facing the connection flange (4) when installed, by means of which the end face area can be centred relative to the connection flange (4), and wherein the filter insert (3) has second centring means (34, 34.2) situated on the outer circumference of its end face area facing the connection flange (4) when installed and capable of being put into centred engagement with the free edge (20) of the screw-on housing (2) when the filter insert (3) is installed, in order to centre the free edge (20) of the screw-on housing (2) relative to the sealing surface (45) of the connection flange (4),
**characterised in that**
with the filter insert (3) in the installed state, a concentric ring structure (36) is integrally formed on the end disc (31) of the filter insert (3) facing the connection flange (4), which ring structure can be put into engagement with a circumferential step (51) or groove or rib on the side of a valve plate (50) facing away from the connection flange (4), the valve plate (50) being sealingly seated on the standpipe (40), and having the basic shape of a circular ring disc of a valve unit (5) forming a non-return valve and/or a filter bypass valve,
that a centring ring (34) is radially outwardly attached to or integral with the end disc (31) of the filter insert (3) facing the connection flange (4) when installed, which centring ring, with the filter insert (3) in place and with the screw-on housing (2) of the associated filter (1) screwed on, is capable of abutting the screw-on housing (2) at the inner circumference (21) of the free edge (20) of the screw-on housing (2), centring the same relative to the sealing surface (45) of the connection flange (4),
that with the filter insert (3) in the installed state, the centring ring (34) has an area (34') extending from the axially outer side of the end disc (31) which has the centring ring (34) towards the sealing surface (45) of the connection flange (4), from which area a seal (22) arranged at a free edge (20) of a screw-on housing (2) of the filter (1) can be radially inwardly enclosed for the most part, and
that the centring ring (34) has passage openings (35).

10. The filter insert according to claim 9, **characterised in that** the passage openings (35) in the centring ring (34) are open towards the outer circumference of the centring ring (34).

11. The filter insert according to claim 9 or 10, **characterised in that** when installed the centring ring (34) extends from the end disc (31) downwards to the sealing surface (45) of the connection flange (4) or down to a flat flange part of the valve plate (50) lying between a lower end face of the centring ring (34) and the sealing surface (45) of the connection flange (4).

## Revendications

1. Filtre à fluide (1) apte à être installé sur une bride de raccordement (4) présentant un tube montant (40) central, ledit filtre à fluide (1) présentant un insert de filtre (3) interchangeable doté d'un corps en tissu filtrant (30) cylindrique creux qui est inséré à l'avant entre deux disques d'extrémité (31) et est apte à être emboîté sur ledit tube montant (40), et le filtre à fluide (1) présentant un boîtier à vis (2) en forme de gobelet, qui possède au centre de son fond un filetage apte à être vissé à un contre-filetage monté sur l'extrémité libre du tube montant (40) et qui porte sur son bord libre (20) un joint d'étanchéité (22) au moyen duquel le boîtier à vis (2) est, à l'état monté, apte à être scellé contre une surface de scellement (45) de la bride de raccordement (4),
**caractérisé en ce**
**que** l'insert de filtre (3) présente, sur sa zone d'extrémité frontale tournée vers la bride de raccordement (4) lorsqu'il est monté, des premiers moyens de centrage (33, 34.1, 36) pour centrer la zone d'extrémité frontale par rapport à la bride de raccordement (4), et que l'insert de filtre (3) présente sur la circonférence extérieure de sa zone d'extrémité frontale tournée vers la bride de raccordement (4) lorsqu'il est monté, des deuxièmes moyens de centrage (34, 34.2) pour centrer le bord libre (20) du boîtier à vis (2) par rapport à la surface de scellement (45) de la bride de raccordement (4), lesdits deuxièmes moyens de centrage (34, 34.2) coopérant, lorsqu'il est monté, avec le bord libre (20) du boîtier à vis (2) et ont un effet de centrage.

2. Filtre à fluide selon la revendication 1, **caractérisé en ce qu'**une bague de centrage (34) à pallier, vu en coupe, est reliée radialement à l'extérieur au disque d'extrémité (31) de l'insert de filtre (3) tourné, lorsqu'il est monté, vers la bride de raccordement (4) ou est réalisée d'un seul tenant avec celui-ci, et que ladite bague de centrage (34), lorsque l'insert de filtre (3) est monté, est en prise, avec une première partie de bague (34.1) dirigée vers la bride de raccordement (4), dans la bride de raccordement (4) et a un effet de centrage, et est, avec une deuxième partie de bague (34.2) tournée dans le sens opposé à la bride de raccordement (4), adjacente à la circonférence intérieure (21) du bord libre (20) du boîtier à vis (2), et ce avec un effet de centrage par rapport à la surface de scellement (45) de la bride de raccordement (4).

3. Filtre à fluide selon la revendication 1, **caractérisé en ce que** radialement à l'intérieur, une lèvre d'étanchéité (33) en prise dans la bride de raccordement (4), lorsque l'insert de filtre (3) est monté, et ayant un effet de scellement et de centrage sur ledit insert de filtre (3) par rapport à la bride de raccordement (4), et une bague de centrage (34), elle radialement à l'intérieur, sont montées ou formées d'un seul tenant sur le disque d'extrémité (31) de l'insert de filtre (3) tourné, lorsqu'il est monté, vers la bride de raccordement (4), et que ladite bague de centrage (34) est, lorsque l'insert de filtre (3) est monté et lorsque le boîtier à vis (2) est vissé, adjacente à la circonférence intérieure (21) du bord libre (20) du boîtier à vis (2) et ce avec un effet de centrage par rapport à la surface de scellement (45) de la bride de raccordement (4).

4. Filtre à fluide selon la revendication 1, **caractérisé en ce que** radialement à l'intérieur, une lèvre d'étanchéité (33) adjacente à la circonférence extérieure du tube montant (40), lorsque l'insert de filtre (3) est monté, et ayant un effet de scellement et de centrage sur l'insert de filtre (3) par rapport au tube montant (40), et une bague de centrage (34), elle radialement à l'extérieur, sont montées ou formées d'un seul tenant sur le disque d'extrémité (31) de l'insert de filtre (3) tourné vers la bride de raccordement (4) lorsqu'il est monté, et que ladite bague de centrage (34) est, lorsque l'insert de filtre (3) est monté et lorsque le boîtier à vis (2) est vissé, adjacente à la circonférence intérieure (21) du bord libre (20) du boîtier à vis (2) et ce avec un effet de centrage par rapport à la surface de scellement (45) de la bride de raccordement (4).

5. Filtre à fluide selon la revendication 1, **caractérisé en ce que** le filtre à fluide (1) présente un ensemble soupape (5) formant un clapet anti-retour et/ou une soupape de contournement, doté d'une plaque de soupape (50) reposant de manière hermétique sur le tube montant (40) et en forme de disque circulaire, dans sa forme de base, que ladite plaque de soupape (50) présente, sur sa face tournée du côté opposé à la bride de raccordement (4), un palier (51) ou rainure ou nervure concentrique périphérique, qu'une structure annulaire (36) concentrique en prise, lorsque l'insert de filtre (3) est monté, avec le palier (51) ou la rainure ou nervure, et une bague de centrage (34), elle radialement à l'extérieur, sont montées ou formées d'un seul tenant sur le disque d'extrémité (31) de l'insert de filtre (3) tourné, lorsqu'il est monté, vers la bride de raccordement (4), et que ladite bague de centrage (34) est, lorsque l'insert de filtre (3) est monté et lorsque le boîtier à vis (2) est vissé, adjacente à la circonférence intérieure (21) du bord libre (20) du boîtier à vis (2), et ce avec un effet de centrage par rapport à la surface de scellement (45) de la bride de raccordement (4).

6. Filtre à fluide selon la revendication 1, **caractérisé en ce que** radialement à l'intérieur, une lèvre d'étanchéité (33) adjacente à une zone de scellement de la circonférence extérieure (44) du tube montant (40), lorsque l'insert de filtre (3) est monté, et ayant un effet de scellement et de centrage sur l'insert de filtre (3) par rapport au tube montant (40), ou une lèvre d'étanchéité (33) en prise dans la bride de raccordement (4) et ayant un effet de scellement et de centrage sur l'insert de filtre (3) par rapport à la bride de raccordement (4), sont montées ou formées d'un seul tenant sur le disque d'extrémité (31) de l'insert de filtre (3) tourné vers la bride de raccordement (4) lorsqu'il est monté, qu'une bague de centrage (34) est montée radialement à l'extérieur sur la zone d'extrémité du corps en tissu filtrant (30) de l'insert de filtre (3), tourné lorsqu'il est monté vers la bride de raccordement (4) et que ladite bague de centrage (34) est, lorsque l'insert de filtre (3) est monté et lorsque le boîtier à vis (2) est vissé, adjacente à la circonférence intérieure (21) du bord libre (20) du boîtier à vis (2) et ce avec un effet de centrage par rapport à la surface de scellement (45) de la bride de raccordement (4).

7. Filtre à fluide selon l'une quelconque des revendications 2 à 6, **caractérisé en ce que** la bague de centrage (34) présente des ouvertures de passage (35).

8. Filtre à fluide selon la revendication 7, **caractérisé en ce que** les ouvertures de passage (35) sont, dans la bague de centrage (34), ouvertes en direction de la circonférence extérieure de ladite bague de centrage (34).

9. Insert de filtre (3) destiné à une utilisation dans un filtre à fluide (1) selon l'une quelconque des revendications 1 à 8, ledit insert de filtre (3) présentant, dans sa zone d'extrémité frontale tournée, lorsqu'il est monté, vers la bride de raccordement (4), des premiers moyens de centrage (36) au moyen desquels ladite zone d'extrémité frontale est apte à être centrée par rapport à la bride de raccordement (4), et l'insert de filtre (3) présentant, sur la circonférence extérieure de sa zone d'extrémité frontale tournée, lorsqu'il est monté, vers la bride de raccordement (4), des deuxièmes moyens de centrage (34, 34.2) qui, lorsque l'insert de filtre (3) est monté, sont aptes à être mis en prise de centrage avec le bord libre (20) du boîtier à vis (2) pour centrer le bord libre (20) du boîtier à vis (2) par rapport à la surface de scellement (45) de la bride de raccordement (4),
**caractérisé en ce**
**qu'**une structure annulaire (36) concentrique est formée d'un seul tenant sur le disque d'extrémité (31) de l'insert de filtre (3) tourné vers la bride de raccordement (4) lorsqu'il est monté, laquelle structure annulaire est apte à être mise en prise, lorsque l'insert de filtre (3) est monté, avec un palier (51) ou rainure ou nervure périphérique sur la face tournée du côté opposé à la bride de raccordement (4), d'une plaque de soupape (50) d'un ensemble soupape (5) formant un clapet anti-retour et/ou une soupape de contournement, laquelle plaque de soupape reposant de manière hermétique sur le tube montant (40) et étant en forme de disque circulaire dans sa forme de base, qu'une bague de centrage (34) est montée radialement à l'extérieur ou formée d'un seul tenant sur le disque d'extrémité (31) de l'insert de filtre (3), tourné vers la bride de raccordement (4) lorsqu'il est monté, laquelle bague de centrage est, lorsque l'insert de filtre (3) est monté et lorsque le boîtier à vis (2) du filtre (1) correspondant est vissé, apte à être disposée adjacente à la circonférence intérieure (21) du bord libre (20) du boîtier à vis (2), et ce avec un effet de centrage par rapport à la surface de scellement (45) de la bride de raccordement (4),
**que** ladite bague de centrage (34) présente une zone (34') s'étendant, lorsque l'insert de filtre (3) est monté, de la face axiale extérieure du disque d'extrémité (31) présentant la bague de centrage (34) à la surface de scellement (45) de la bride de raccordement (4), zone dont un joint d"étanchéité (22) disposé sur un bord libre (20) d'un boîtier à vis (2) du filtre (1) est apte, dans sa majeure partie, à être insérée radialement à l'intérieur, et
**que** la bague de centrage (34) présente des ouvertures de passage (35).

10. Insert de filtre selon la revendication 9, **caractérisé en ce que** les ouvertures de passage (35) sont, dans la bague de centrage (34), ouvertes en direction de la circonférence extérieure de ladite bague de centrage (34).

11. Insert de filtre selon la revendication 9 ou 10, **caractérisé en ce que** la bague de centrage (34) s'étend du disque d'extrémité (31) vers le bas, lorsqu'il est monté, jusqu'à la surface de scellement (45) de la bride de raccordement (4) ou jusqu'à une partie de bride plate de la plaque de soupape (50) située, lorsqu'il est monté, entre une face frontale inférieure de la bague de centrage (34) et la surface de scellement (45) de la bride de raccordement (4).
